# EUROPÄISCHE PATENTANMELDUNG

(11) **EP 4 552 982 A1**
(43) Veröffentlichungstag der Anmeldung: **14.05.2025**
(21) Anmeldenummer: 23208989.6
(22) Anmeldetag: 10.11.2023
(51) Int. Cl.: B64G 1/64

(54) **VORRICHTUNG ZUM LÖSBAREN BEFESTIGEN VON NUTZLAST AN EINEM TRÄGER UND TRÄGER ZUM LÖSBAREN BEFESTIGEN VON NUTZLAST**

(71) Anmelder: EXOLAUNCH GmbH, 10785 Berlin (DE)
(72) Erfinder: STERNHARZ, Dmitriy, 10785 Berlin (DE); SCHWARZ, Peter, 5023 Salzburg (AT); GRUBER, Johannes, 5020 Salzburg (AT)
(74) Vertreter: Manitz Finsterwald Patent- und Rechtsanwaltspartnerschaft mbB

(57) **Zusammenfassung**

Eine Vorrichtung zum lösbaren Befestigen von Nutzlast an einem Träger umfasst eine Verriegelungseinheit, die einen zwischen einer Arretierstellung und einer Freigabestellung bewegbaren Verriegelungsmechanismus aufweist, eine Montagebasis mit einem zumindest abschnittsweise mit parallelen Rillen versehenen Verriegelungsbolzen, wobei der Verriegelungsmechanismus mehrere Schwenkriegel aufweist, die in der Arretierstellung den Verriegelungsbolzen im Bereich der Rillen arretieren, sowie ein ausschließlich translatorisch verschiebbares Auslöseelement, das mit den Schwenkriegeln gekoppelt ist.

## Beschreibung

Die Erfindung betrifft eine Vorrichtung zum lösbaren Befestigen von Nutzlast an einem Träger sowie einen Träger zum lösbaren Befestigen von Nutzlast.

Derartige Vorrichtungen und Träger werden in der Raumfahrt verwendet, um Nutzlast wie beispielsweise Satelliten in eine bestimmte Umlaufbahn zu transportieren und dort zu lösen und freizugeben. Hierzu kann die Nutzlast durch mehrere derartige Vorrichtungen an den Träger gekoppelt werden. Zum Lösen der Nutzlast wird ein Auslösemechanismus betätigt, so dass die Vorrichtungen die Nutzlast freigeben.

Es ist eine Aufgabe der vorliegenden Erfindung, eine Vorrichtung zum lösbaren Befestigen von Nutzlast an einem Träger sowie einen Träger zum lösbaren Befestigen von Nutzlast mit einer verbesserten funktionalen Zuverlässigkeit vorzuschlagen.

Diese Aufgabe wird durch den Gegenstand der unabhängigen Ansprüche gelöst. Vorteilhafte Weiterbildungen sind in den abhängigen Ansprüchen definiert und ergeben sich auch aus der Beschreibung und den Zeichnungen.

Die erfindungsgemäße Vorrichtung dient zum lösbaren Befestigen von Nutzlast an einem Träger und umfasst eine Verriegelungseinheit, die einen zwischen einer Arretierstellung und einer Freigabestellung bewegbaren Verriegelungsmechanismus aufweist, und eine Montagebasis mit einem zumindest abschnittsweise mit parallelen Rillen versehenen Verriegelungsbolzen, wobei der Verriegelungsmechanismus mehrere Schwenkriegel aufweist, die in der Arretierstellung den Verriegelungsbolzen im Bereich der Rillen arretieren. Ferner umfasst die erfindungsgemäße Vorrichtung ein ausschließlich translatorisch verschiebbares Auslöseelement, das mit den Schwenkriegeln gekoppelt ist.

Die Verriegelungseinheit kann fest an den Träger gekoppelt werden, wohingegen die Montagebasis fest an der Nutzlast montiert ist. Wenn sich der Verriegelungsmechanismus in der Arretierstellung befindet und die Schwenkriegel den Verriegelungsbolzen im Bereich der Rillen arretieren, ist die Nutzlast somit an den Träger gekoppelt. Bei einer Auslösung durch das mit den Schwenkriegeln gekoppelte Auslöseelement bewegt sich der Verriegelungsmechanismus in die Freigabestellung, in der die Schwenkriegel den Verriegelungsbolzen freigeben, sodass Verriegelungseinheit und Montagebasis, und damit Träger und Nutzlast, voneinander entkoppelt sind.

Die Rillen können sich beispielsweise in Umfangsrichtung um eine Mittelachse des Verriegelungsbolzens erstrecken, sodass eine Erstreckungsebene der jeweiligen Rillen rechtwinklig zur Mittelachse des Verriegelungsbolzens orientiert ist. Insbesondere weisen die Rillen jeweils eine Vertiefung auf, die von zwei insbesondere parallel zu der Vertiefung umlaufenden Rippen benachbart ist.

Die Schwenkriegel können einen Abschnitt mit einer korrespondierenden Struktur aufweisen, das heißt insbesondere ebenfalls mit Rippen und benachbarten Rillen versehen sein, sodass die korrespondierenden Strukturen der Schwenkriegel und des Verriegelungsbolzens in der Arretierstellung ineinander eingreifen können, wodurch der Verriegelungsbolzen durch den Verriegelungsmechanismus arretiert wird. Dabei greifen die Rippen der Schwenkriegel in die Rillen des Verriegelungsbolzens und umgekehrt.

Das Auslöseelement kann über einen ausschließlich translatorisch bewegbaren Koppelring mit den Schwenkriegeln gekoppelt sein, wobei die Bewegungsrichtungen des Auslöseelements und des Koppelrings orthogonal zueinander verlaufen können. Die translatorische Bewegung des Koppelrings kann über die Kopplung mit den Schwenkriegeln in eine Schwenkbewegung der Schwenkriegel in entweder die Arretierstellung oder die Freigabestellung umgesetzt werden. Die Bewegung des Auslöseelements wiederum wird in eine dazu orthogonale Bewegung des Koppelrings umgesetzt, sodass aus einer translatorischen Bewegung des Auslöseelements eine Schwenkbewegung der Schwenkriegel resultiert.

Der Koppelring ist als ringförmig ausgestalteter Körper ausgebildet, der insbesondere in seiner Umfangsrichtung geschlossen sein kann. Der Koppelring kann an seinem Innenumfang und/oder am Außenumfang etwa mehreckig, abgerundet oder auch kreisrund ausgestaltet sein. Der Koppelring kann ferner in einer Ringaufnahme der Verriegelungseinheit angeordnet sein, deren innere Umfangsfläche zumindest abschnittsweise komplementär zur äußeren Umfangsfläche des Koppelrings ausgebildet sein kann, sodass die Ringaufnahme eine Führung für die translatorische Bewegung des Koppelrings bildet und Kipp- oder Drehbewegungen des Koppelrings verhindert.

Der Koppelring kann mit jedem Schwenkriegel über einen an beiden Enden angelenkten Schwenkhebel verbunden sein, sodass die translatorische Bewegung des Koppelrings eine Schwenkbewegung des Schwenkhebels hervorruft und den Verriegelungsmechanismus zwischen Arretierstellung und Freigabestellung bewegt. Der Schwenkhebel kann als starrer Körper ausgebildet sein, und die Anlenkung an seinen beiden Enden kann über Drehgelenke erfolgen.

Insbesondere kann eine Mittelachse der Schwenkhebel in der Arretierstellung orthogonal zur Mittelachse des Verriegelungsbolzens orientiert sein. Dies bewirkt, dass der jeweilige Schwenkhebel den jeweiligen Schwenkriegel gegen den Verriegelungsbolzen verspannt und eine initiale Öffnungsbewegung der Schwenkriegel orthogonal zur Mittelachse der Schwenkhebel verlaufen würde, sodass die Schwenkhebel als Kniehebel dienen, die eine Öffnungsbewegung der Schwenkriegel blockieren, solange sich der Koppelring nicht bewegt. Hierdurch sind die Schwenkriegel durch die Schwenkhebel zuverlässig in der Arretierstellung gehalten.

Der Koppelring kann mit Eingriffselementen versehen sein, die in eine Kulisse des Auslöseelements eingreifen, um bei einer Bewegung des Auslöseelements eine dazu orthogonale Bewegung des Koppelrings hervorzurufen. Die Eingriffselemente können etwa zylindrisch ausgestaltet und an dem Koppelring befestigt sein. Die Kulisse kann etwa durch schlitzartige Nuten an einer inneren Umfangsfläche des Auslöseelements gebildet sein, in die die Eingriffselemente jeweils hereinragen. Insbesondere kann die Kulisse zumindest teilweise in einer Richtung orientiert sein, welche eine Komponente in Richtung der translatorischen Bewegung des Auslöseelements und eine Komponente in Richtung der translatorischen Bewegung des Koppelrings aufweist, d.h. die Kulisse kann sich schräg zur Verschieberichtung des Auslöseelementes erstrecken.

Der Koppelring kann in der Arretierstellung in Richtung der Freigabestellung vorgespannt sein, um den Koppelring im Falle einer Auslösung mit einem Öffnungsimpuls zu beaufschlagen und eventuell auftretende Reibungskräfte zu überwinden. Hierzu kann der Koppelring etwa mit Federelementen, insbesondere Druckfedern, versehen sein, die in der Arretierstellung gespannt sind und den Koppelring gegen ein Gehäuse der Verriegelungseinheit oder gegen einen an dem Gehäuse befestigten oder mit dem Gehäuse verschraubten Bolzen abstützen.

Wie vorstehend beschrieben, kann es vorteilhaft sein, wenn der Verriegelungsmechanismus eine durch zumindest eine Kulisse gebildete Kulissenführung aufweist.

Der Verriegelungsbolzen kann beweglich mit der Montagebasis verbunden sein. Beispielsweise kann der Verriegelungsbolzen mit seinem Kopf an der Montagebasis aufliegen und mit seinem Schaft durch eine Bohrung der Montagebasis ragen, ohne jedoch translatorisch oder rotatorisch an der Montagebasis fixiert zu sein.

Die Montagebasis kann einen Vorspannmechanismus aufweisen, mit dem der Verriegelungsbolzen in der Arretierstellung gegenüber der Montagebasis vorgespannt werden kann. Dadurch kann über den in der Arretierstellung an der Verriegelungseinheit arretierten Verriegelungsbolzen eine feste und insbesondere spielfreie Verbindung zwischen Montagebasis und Verriegelungseinheit, und damit zwischen Nutzlast und Träger, hergestellt werden.

Der Vorspannmechanismus kann eine Keilanordnung aufweisen, die insbesondere zwei Keile umfasst, von denen einer quer zur Mittelachse des Verriegelungsbolzens und der andere ausschließlich parallel zur Mittelachse des Verriegelungsbolzens bewegbar ist. Insbesondere kann der quer zur Mittelachse bewegbare Keil in seiner Position quer zur Mittelachse einstellbar sein, etwa mittels einer Einstellschraube. Dabei kann sich dieser unter den ausschließlich parallel zur Mittelachse des Verriegelungsbolzens bewegbaren Keil schieben, welcher hierdurch parallel zur Mittelachse bewegt wird und dabei den Verriegelungsbolzen vorspannt, beispielsweise indem er an dem Kopf des Verriegelungsbolzens angreift und dadurch eine Kraft auf den Verriegelungsbolzen in eine Richtung von der Verriegelungseinheit weg ausübt. Um die Bewegbarkeit des ausschließlich parallel zur Mittelachse des Verriegelungsbolzens bewegbaren Keils entsprechend zu definieren, kann dieser durch einen an der Montagebasis befestigten und den Keil durchdringenden Stift in seiner Position gehalten sein und/oder hinsichtlich seiner Form an eine entsprechende Ausnehmung der Montagebasis angepasst sein, sodass der Keil zumindest teilweise formschlüssig in der Ausnehmung angeordnet ist.

Die Montagebasis und die Verriegelungseinheit können komplementär und insbesondere konusförmig ausgebildete Zentrierflächen aufweisen, wobei zwischen den Zentrierflächen eine Trennschicht vorgesehen sein kann. Möglich ist dabei auch, dass die Konusform der Zentrierflächen oder einer der beiden Zentrierflächen durch die Trennschicht selbst ausgebildet wird. Die Trennschicht kann formschlüssig mit der Verriegelungseinheit oder der Montagebasis verbunden sein. Beispielsweise kann die Trennschicht als konischer Ring ausgebildet sein, der über eine überhängende Kante der Verriegelungseinheit oder der Montagebasis eingepresst werden kann. Die Trennschicht kann alternativ oder zusätzlich stoffschlüssig, beispielsweise durch Verkleben, an der Zentrierfläche der Montagebasis und/oder der Zentrierfläche der Verriegelungseinheit befestigt sein. Die Zentrierflächen ermöglichen eine definierte und spielfreie Zentrierung der Montagebasis und der Verriegelungseinheit zueinander. Zudem kann durch die Trennschicht vermieden werden, dass unerwünschte Materialverreibungen zwischen Montagebasis und Verriegelungseinheit bis hin zu Reibschweißeffekten stattfinden, welche das Freigeben der Montagebasis mit der Nutzlast erschweren oder gar verhindern würden. Mögliche geeignete Materialien für die Trennschicht sind beispielsweise thermoplastische Kunststoffe.

Der Verriegelungsbolzen kann in der Freigabestellung in der Montagebasis gegen die Kraft einer Feder axial bewegbar sein. Mittels der Feder kann erreicht werden, dass keine undefinierten und ungewollten Bewegungen des Verriegelungsbolzens in der Freigabestellung und insbesondere nach der Trennung von Montagebasis und Verriegelungseinheit stattfinden.

Das Auslöseelement kann als ein von der Verriegelungseinheit geführter Rahmen ausgebildet sein. Zudem kann das Auslöseelement durch entsprechende Federn, etwa Druckfedern, gegen die Verriegelungseinheit vorgespannt sein, und zwar in Richtung der Freigabestellung.

Der erfindungsgemäße Träger dient zum lösbaren Befestigen von Nutzlast und umfasst mehrere erfindungsgemäße Vorrichtungen der vorstehend beschriebenen Art, deren Verriegelungseinheiten an dem Träger montiert sind, und einen drehbar gelagerten Synchronring, der mit allen Auslöseelementen mechanisch verbunden ist, um diese gleichzeitig zu verschieben und dadurch den Verriegelungsmechanismus aller Vorrichtungen von der Arretierstellung in die Freigabestellung zu bewegen. Durch die synchrone oder gleichzeitige Auslösung öffnen die Verriegelungsmechanismen aller Auslöseelemente gleichzeitig, sodass die Nutzlast mit der Montagebasis von dem Träger entkoppelt wird und ausgeworfen werden kann.

Insbesondere können die Auslöseelemente mit dem Synchronring spielbehaftet gekoppelt sein. Zu diesem Zweck können etwa die Auslöseelemente ein Langloch für einen mit dem Synchronring verbundenen Auslösebolzen aufweisen. Findet eine Auslösung über den Synchronring statt, wird zunächst während eines Leerhubs (Bewegung innerhalb des Langlochs) ein Impuls aufgebaut, bevor der Auslösebolzen an dem Auslöseelement anschlägt und dadurch das Auslöseelement verschiebt. Damit können insbesondere potentielle reibungsbedingte Störungen des Auslösevorgangs vermieden werden, indem aufgrund des zuvor aufgebauten Impulses derartige Reibungen überwunden werden.

Die Erfindung wird nachfolgend anhand eines in den Zeichnungen schematisch gezeigten Ausführungsbeispiels beispielhaft erläutert. Dabei zeigt
- Fig. 1: eine perspektivische Ansicht eines Ausführungsbeispiels eines Trägers mit mehreren Vorrichtungen zum lösbaren Befestigen von Nutzlast an dem Träger, deren Montagebasen gemäß einer Explosionsansicht entfernt dargestellt sind,
- Fig. 2: eine perspektivische teilgeschnittene Ansicht einer der Vorrichtungen zum lösbaren Befestigen von Nutzlast an dem Träger aus Fig. 1,
- Fig. 3: eine Schnittansicht der Vorrichtung aus Fig. 2, bei welcher sich der Verriegelungsmechanismus in seiner Freigabestellung befindet,
- Fig. 4: eine Schnittansicht der Vorrichtung entsprechend der Schnittansicht aus Fig. 3, wobei sich jedoch der Verriegelungsmechanismus in seiner Arretierstellung befindet,
- Fig. 5: eine Ansicht der Unterseite der Vorrichtung aus Fig. 2, bei welcher sich der Verriegelungsmechanismus in seiner Freigabestellung befindet,
- Fig. 6: eine Schnittansicht der Vorrichtung aus Fig. 2, bei welcher sich der Verriegelungsmechanismus in seiner Freigabestellung befindet und die Montagebasis und die Verriegelungseinheit gemäß einer Explosionsansicht voneinander entfernt dargestellt sind,
- Fig. 7: eine Schnittansicht der Montagebasis und des Kopfs des Verriegelungsbolzens aus Fig. 3,
- Fig. 8: eine perspektivische Schnittansicht der Montagebasis aus Fig. 3,
- Fig. 9: eine perspektivische Ansicht des Auslöseelements der Vorrichtung aus Fig. 2 und der Anbindungsöffnung zum spielbehafteten Koppeln des Auslöseelements mit einem Synchronring und
- Fig. 10: eine weitere Schnittansicht der Verriegelungseinheit und des Auslöseelements aus Fig. 3.

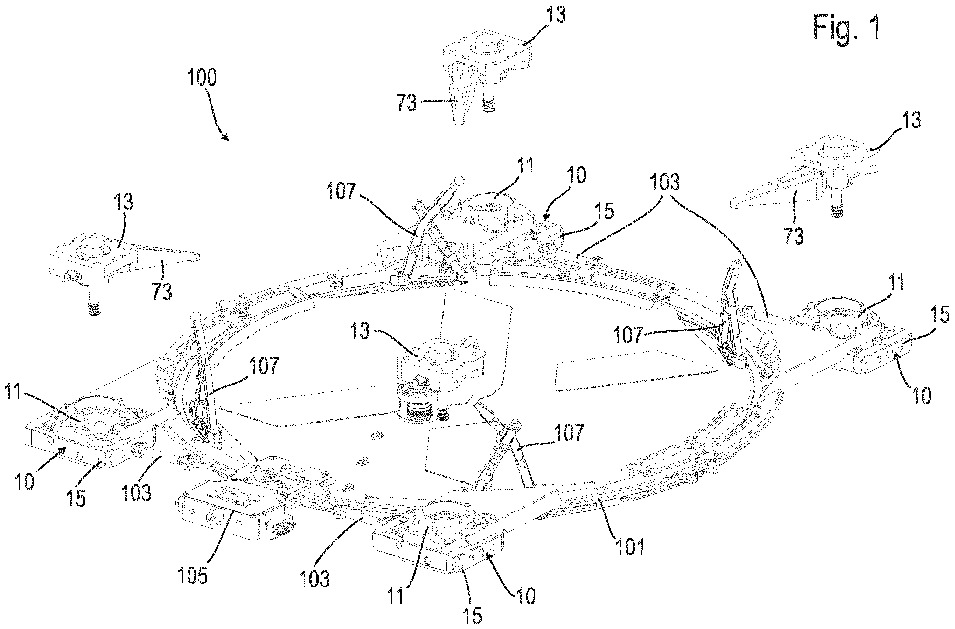

Fig. 1 zeigt einen Träger 100 zum lösbaren Befestigen von Nutzlast, wie etwa einem Satelliten, wobei an dem Träger 100 Vorrichtungen 10 zum lösbaren Befestigen der Nutzlast an dem Träger 100 montiert sind. Im vorliegenden Ausführungsbeispiel sind vier Vorrichtungen 10 vorhanden.

Wie aus Fig. 1 ersichtlich, weisen die Vorrichtungen 10 jeweils eine Verriegelungseinheit 11, eine jeweils in explosionsartiger Ansicht von der Verriegelungseinheit 11 entfernt dargestellte Montagebasis 13 und ein Auslöseelement 15 auf. Die Verriegelungseinheiten 11 sind jeweils fest an dem Träger 100 montiert, wohingegen die Montagebasen 13 fest mit einer nicht dargestellten Nutzlast, etwa einem Satelliten, verbunden werden können. Zudem weist der Träger 100 einen Synchronring 101 auf, der vorgespannt und drehbar gelagert und mit den Auslöseelementen 15 der Vorrichtungen 10 über Auslösestangen 103 mechanisch verbunden ist, sodass eine Drehung des Synchronrings 101 eine gleichzeitige Verschiebung aller Auslöseelemente 15 bewirkt. Die Drehung des Synchronrings 101 wird durch Ansteuerung eine Auslöseeinheit 105 initiiert.

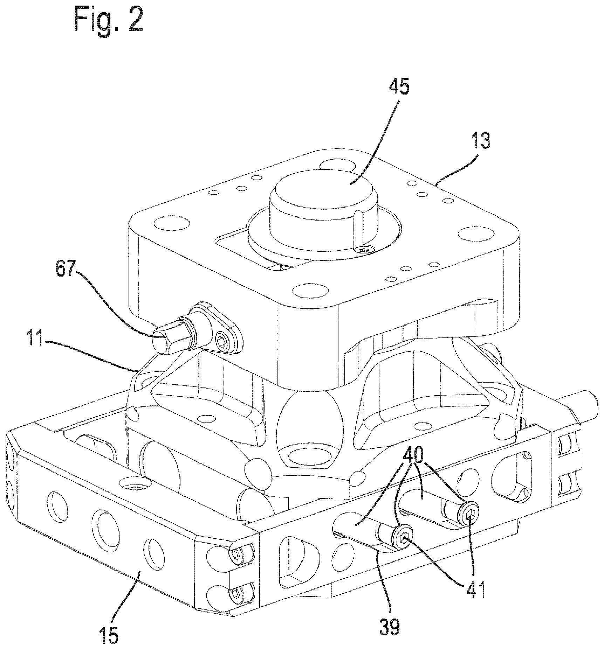

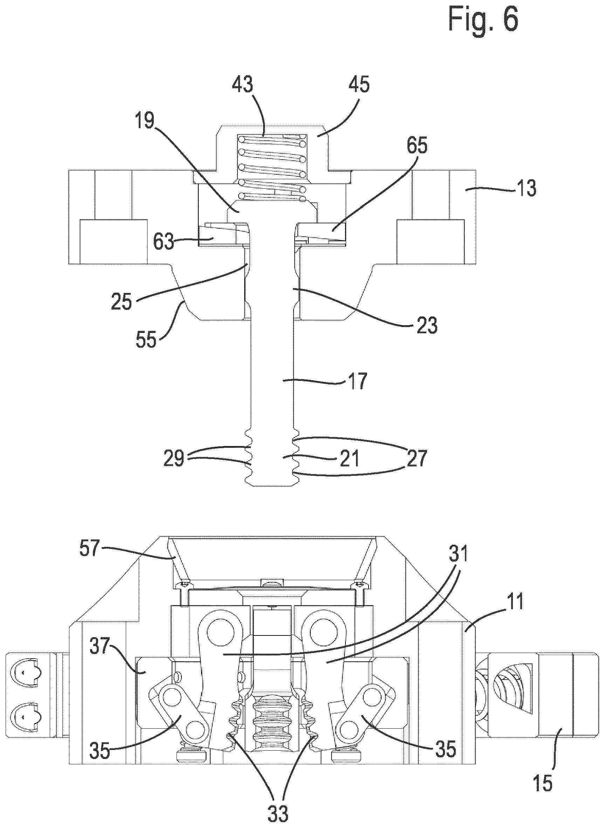

Fig. 2 bis 6 zeigen beispielhaft eine der Vorrichtungen 10 in mehreren Ansichten. Die Montagebasis 13 und die Verriegelungseinheit 11 sind über eine konusförmige Zentrierung 55 zueinander zentriert, wobei zwischen den beiden Bauteilen eine Trennschicht 57 vorgesehen sein kann, welche Reibschweißeffekte zwischen der Montagebasis 13 und der Verriegelungseinheit 11 verhindert. Wie in Fig. 6 gezeigt, ist die Trennschicht 57 im vorliegenden Ausführungsbeispiel formschlüssig und fest mit der Verriegelungseinheit 11 verbunden und bildet die konusförmige Zentrierfläche der Verriegelungseinheit 11 aus. Die formschlüssige Verbindung erfolgt dadurch, dass die Trennschicht 57 als konischer Ring ausgebildet ist, der über eine überhängende Kante der Verriegelungseinheit 11 eingepresst wird. Alternativ oder zusätzlich ist eine stoffschlüssige Verbindung denkbar, etwa durch Verkleben der Trennschicht 57 mit der Verriegelungseinheit 11.

Die Montagebasis 13 umfasst einen Verriegelungsbolzen 17, der einen Kopf 19, einen Arretierabschnitt 21 und einen Stützabschnitt 23 aufweist. Der Verriegelungsbolzen 17 liegt mit seinem Kopf 19 an einem eine Keilanordnung 63, 65 aufweisenden Vorspannmechanismus auf und ist durch eine Druckfeder 43, die sich an ihrem anderen Federende gegen eine fest an der Montagebasis 13 befestigte Verschlusskappe 45 abstützt, gegen die Keilanordnung 63, 65 vorgespannt. Die Druckfeder 43 dient der Vermeidung von unkontrollierten Bewegungen des Verriegelungsbolzens 17 in einer Freigabestellung eines Verriegelungsmechanismus, der nachfolgend noch näher beschrieben wird. Der Verriegelungsbolzen 17 ist in der Freigabestellung jedoch in der Montagebasis 13 gegen die Kraft der Druckfeder 43 axial bewegbar. Die im vorliegenden Beispiel als Schraubenfeder ausgebildete Druckfeder 43 kann in grundsätzlich bekannter Weise auch durch andere Federn wie etwa eine Flachfeder ersetzt werden.

Der Stützabschnitt 23 des Verriegelungsbolzen 17 befindet sich am Schaft des Verriegelungsbolzens 17 zwischen den beiden Enden und ist mit einer lokalen Umfangsverdickung versehen, um das Spiel zwischen Stützabschnitt 23 und Montagebasis 13 zu verringern und so den Halt des durch eine entsprechende Bohrung 25 der Montagebasis 13 geführten Verriegelungsbolzens 17 im Bereich des Stützabschnitts 23 zu erhöhen. Der Arretierabschnitt 21, welcher im sich in die Verriegelungseinheit 11 erstreckenden Bereich des Verriegelungsbolzens 17 angeordnet ist, ist mit um die Mittelachse des Verriegelungsbolzens 17 umlaufenden, parallelen Rillen 27 versehen, sodass die Rillen 27 innerhalb zur Mittelachse des Verriegelungsbolzens 17 rechtwinklig orientierten Ebenen verlaufen. Jede Rille 27 umfasst eine umlaufende radiale Vertiefung, die von zwei benachbarten, parallel zu der Vertiefung umlaufenden Rippen 29 umgeben ist.

Die Verriegelungseinheit 11 weist den zuvor bereits erwähnten Verriegelungsmechanismus mit mehreren, in diesem Beispiel vier Schwenkriegeln 31 auf. Die Schwenkriegel 31 weisen jeweils einen Eingriffsabschnitt 33 auf, welche gegenförmig zu dem Arretierabschnitt 21 ausgebildet sind und zu den Rillen 27 und Rippen 29 des Verriegelungsbolzens 17 korrespondierende Rillen und Rippen aufweisen.

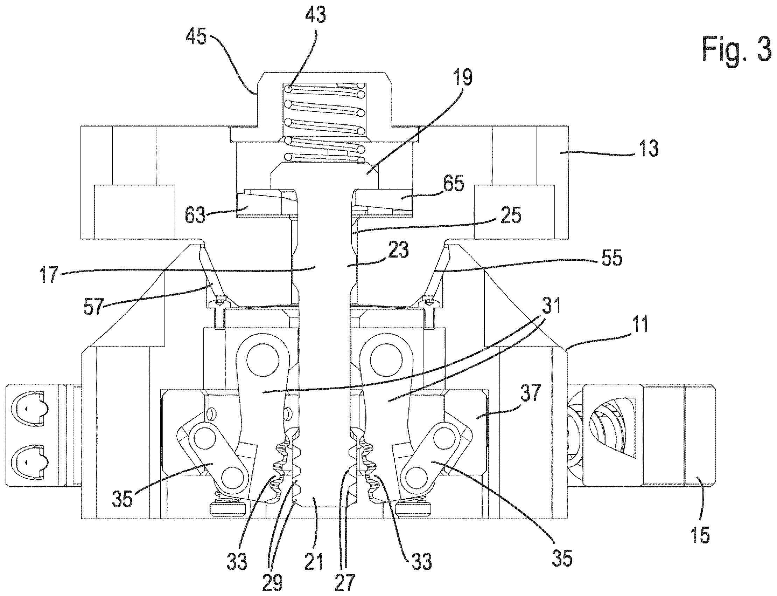

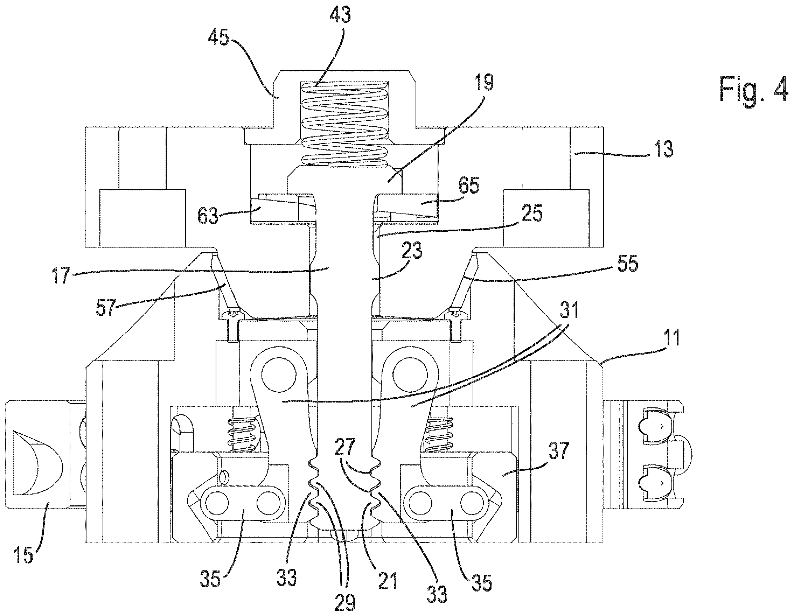

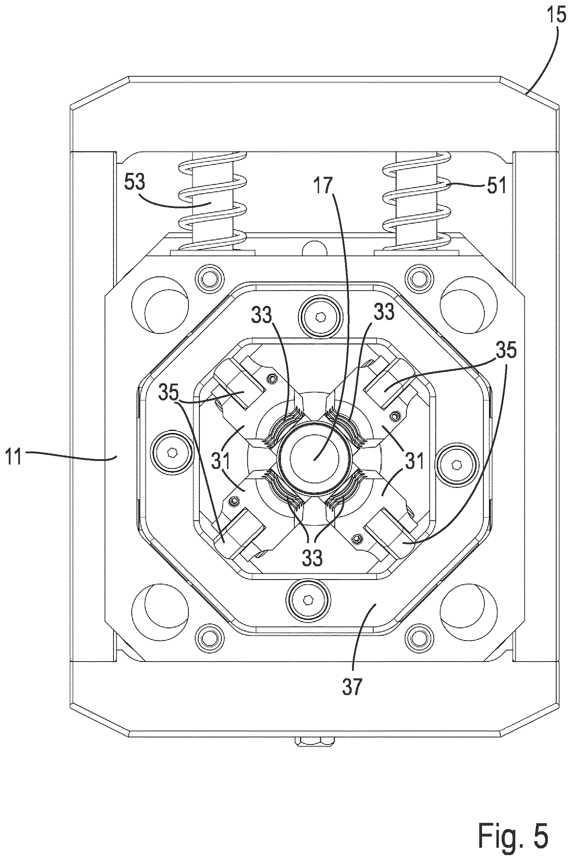

Der Verriegelungsmechanismus ist zwischen einer beispielsweise in Fig. 4 gezeigten Arretierstellung und einer beispielsweise in Fig. 3 gezeigten Freigabestellung bewegbar. Zu diesem Zweck sind die Schwenkriegel 31 schwenkbar an der Verriegelungseinheit 11 gelagert. Ferner ist an jedem Schwenkriegel 31 ein Endabschnitt eines starren Schwenkhebels 35 drehbar gelagert, dessen anderer Endabschnitt drehbar an einem Koppelring 37 gelagert ist. Der Koppelring 37 ist parallel und koaxial zur Mittelachse des Verriegelungsbolzens 17 beweglich, jedoch radial und in Umfangsrichtung formschlüssig in einer Ringaufnahme der Verriegelungseinheit 11 aufgenommen, siehe insbesondere Fig. 5.

Durch eine translatorische Bewegung des Koppelrings 37 parallel zur Mittelachse des Verriegelungsbolzens 17 werden die Schwenkriegel 31 um ihre Schwenkachse geschwenkt. Befindet sich der Koppelring 37 in der oberen Position, wie etwa in Fig. 3 gezeigt, ist der Verriegelungsmechanismus in der Freigabestellung, in welcher die Eingriffsabschnitte 33 der Schwenkriegel 31 nicht mit dem Arretierabschnitt 21 im Eingriff sind. Befindet sich der Koppelring 37 hingegen in der unteren Position, wie etwa in Fig. 4 gezeigt, ist der Verriegelungsmechanismus in der Arretierstellung, in welcher die Eingriffsabschnitte 33 der Schwenkriegel 31 mit dem Arretierabschnitt 21 im Eingriff sind, sodass die Schwenkriegel 31 den Verriegelungsbolzen 17 arretieren. Wie Fig. 4 entnommen werden kann, sind in diesem Zustand die Mittelachsen der Schwenkhebel 35 orthogonal zur Mittelachse des Verriegelungsbolzens 17 orientiert, sodass der jeweilige Schwenkhebel 35 eine Öffnungsbewegung des jeweiligen Schwenkriegels 31 blockiert.

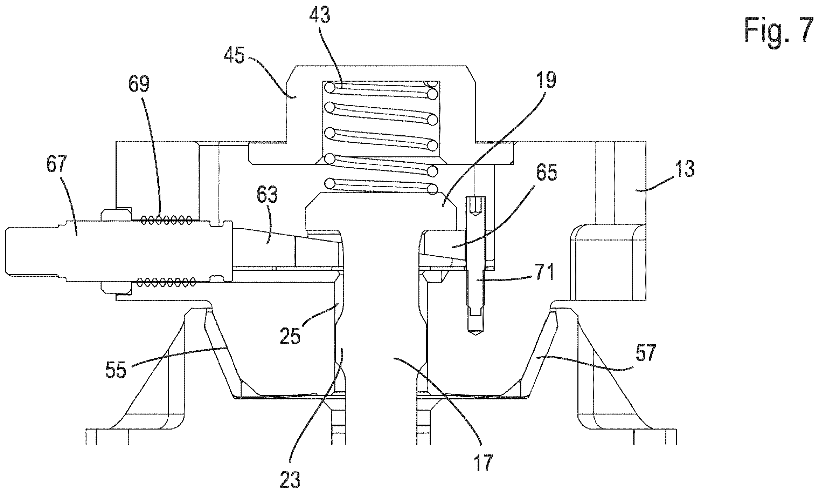

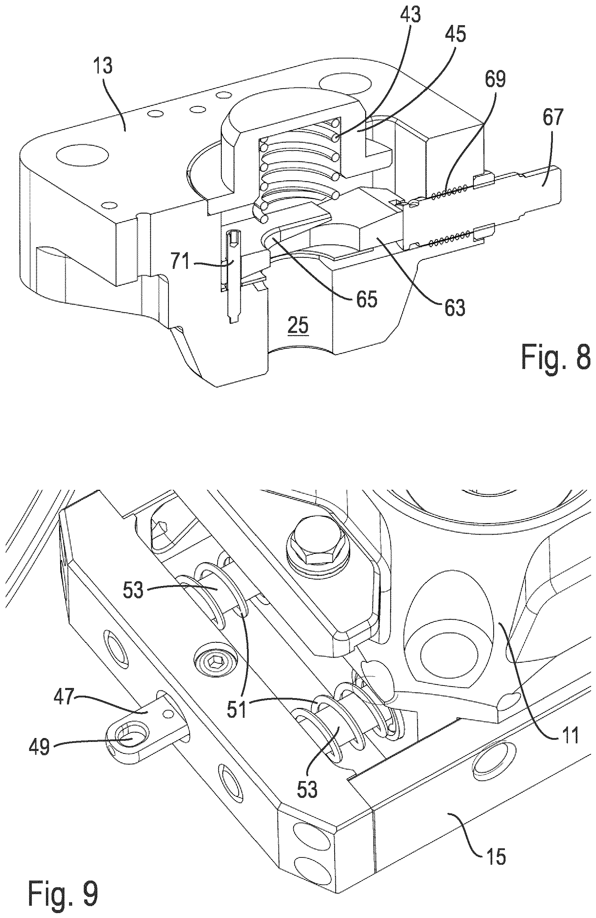

Wie zuvor bereits erwähnt, liegt der Kopf 19 des Verriegelungsbolzens 17 an dem die Keilanordnung 63, 65 aufweisenden Vorspannmechanismus auf, durch den der Verriegelungsbolzen 17 in der Arretierstellung gegenüber der Montagebasis 13 vorgespannt werden kann. Die Keilanordnung 63, 65 umfasst zu diesem Zweck einen ersten Keil 63, welcher ausschließlich quer zur Mittelachse des Verriegelungsbolzens 17 bewegbar ist, und einen zweiten Keil 65, welcher ausschließlich parallel zur Mittelachse des Verriegelungsbolzens 17 bewegbar ist. Die Bewegung des ersten Keils 63 erfolgt durch eine an dem ersten Keil 63 angreifende Einstellschraube 67, die mit einem Gewinde 69 in der Montagebasis 13 im Eingriff ist, in einer Richtung quer zur Mittelachse des Verriegelungsbolzens 17 in dem Gewinde 69 einstellbar ist und mit einem Ende aus der Montagebasis 13 herausragt, siehe Fig. 7. Die Bewegung des zweiten Keils 65 wird durch die Bewegung des ersten Keils 63 hervorgerufen, indem sich der erste Keil 63 unter den zweiten Keil 65 schiebt. Zur Führung und um ein Verkanten oder Verdrehen des zweiten Keils 65 zu vermeiden, erstreckt sich ein mit der Montagebasis 13 verschraubter Stift 71 durch den zweiten Keil 65 parallel zur Mittelachse des Verriegelungsbolzens 17. Wie insbesondere Fig. 8 zu entnehmen ist, sind beide Keile 63, 65 annähernd U-förmig ausgebildet bzw. mit einer Ausnehmung versehen, um den Verriegelungsbolzen 17 durchzuführen, wobei insbesondere die Ausnehmung des ersten Keils 63, der quer zur Mittelachse des Verriegelungsbolzens 17 bewegbar ist, länglich ausgestaltet ist, um die Bewegbarkeit zu ermöglichen.

Wenn sich der Verriegelungsmechanismus in der Arretierstellung befindet und mit dem Verriegelungsbolzen 17 im Eingriff ist, kann der Vorspannmechanismus genutzt werden, um Verriegelungsbolzen 17 in Freigaberichtung, also in Richtung von der Verriegelungseinheit 11 weg, vorzuspannen und so zwischen Nutzlast und Träger 100 eine starre und spielfreie Verbindung herzustellen, wobei der Verriegelungsbolzen 17 frei von jeglichen Querkräften ist und lediglich in Längsrichtung verspannt ist, da der Kopf 19 des Verriegelungsbolzens 17 nur mit dem zweiten Keil 65 jedoch nicht mit dem ersten Keil 63 in Kontakt steht (vgl. Fig. 7).

Mit Blick auf Fig. 2 ist ersichtlich, dass das Auslöseelement 15 rahmenförmig ausgebildet ist und die Verriegelungseinheit 11 umgibt. Das Auslöseelement 15 ist relativ zu der Verriegelungseinheit 11 ausschließlich translatorisch in eine Richtung bewegbar und in dieser Richtung an Außenflächen der Verriegelungseinheit 11 geführt. Zudem weist die Verriegelungseinheit 11 (wie in Fig. 9 gezeigt) sich in der Bewegungsrichtung des Auslöseelements 15 erstreckende Führungsbolzen 53 auf, welche sich durch entsprechende Bohrungen des Auslöseelementes 15 erstrecken. Die Bewegungsrichtung des Auslöseelements 15 verläuft dabei orthogonal zur Bewegungsrichtung des Koppelrings 37.

An dem Auslöseelement 15 ist an den beiden gegenüberliegenden Rahmenteilen, welche an der Verriegelungseinheit 11 geführt sind, eine Kulisse 39 in Form von Ausnehmungen ausgebildet. Die Erstreckungsrichtung der Kulisse 39 weist eine Komponente in Bewegungsrichtung des Auslöseelements 15 relativ zur Verriegelungseinheit 11 und eine Komponente in Richtung der Bewegungsrichtung des Koppelrings 37 auf. In die Kulisse 39 greifen Eingriffselemente 41 ein, welche fest mit dem Koppelring 37 verbunden und durch sich parallel zur Bewegungsrichtung des Koppelrings 37 erstreckende, jedoch in Fig. 2 von dem Auslöseelement 15 verdeckte Langlöcher im Gehäuse der Verriegelungseinheit 11 hindurchgeführt sind. Wird das Auslöseelement 15 aufgrund einer Auslösung translatorisch relativ zu der Verriegelungseinheit 11 verschoben, werden die Eingriffselemente 41, und damit der Koppelring 37, durch die Bewegung des Auslöseelements 15 mit der Kulisse 39 relativ zu den Eingriffselementen 41 von der in Fig. 2 und 4 gezeigten Position in die in Fig. 3 gezeigte Position bewegt. Die Bewegung des Koppelrings 37 verläuft also orthogonal zu der Bewegung des Auslöseelements 15. Aufgrund der Bewegung des Koppelrings 37 wird der Verriegelungsmechanismus mit den Schwenkriegeln 31 von der Arretierstellung in die Freigabestellung überführt. Dadurch wird die an der Nutzlast montierte Montagebasis 13 von der an dem Träger 100 montierten Verriegelungseinheit 11 freigegeben. Wie erwähnt, weist die Erstreckungsrichtung der Kulisse 39 eine Komponente in Bewegungsrichtung des Auslöseelements 15 relativ zur Verriegelungseinheit 11 und eine Komponente in Richtung der Bewegungsrichtung des Koppelrings 37 auf. In ihren beiden Endstellungen weist die Kulisse 39 jedoch Anlaufabschnitte 40 auf, in denen sich die Kulisse 39 ausschließlich in Bewegungsrichtung des Auslöseelements 15 relativ zur Verriegelungseinheit 11 erstreckt, um eine ungewollte Verschiebung des Koppelrings 37 zu blockieren.

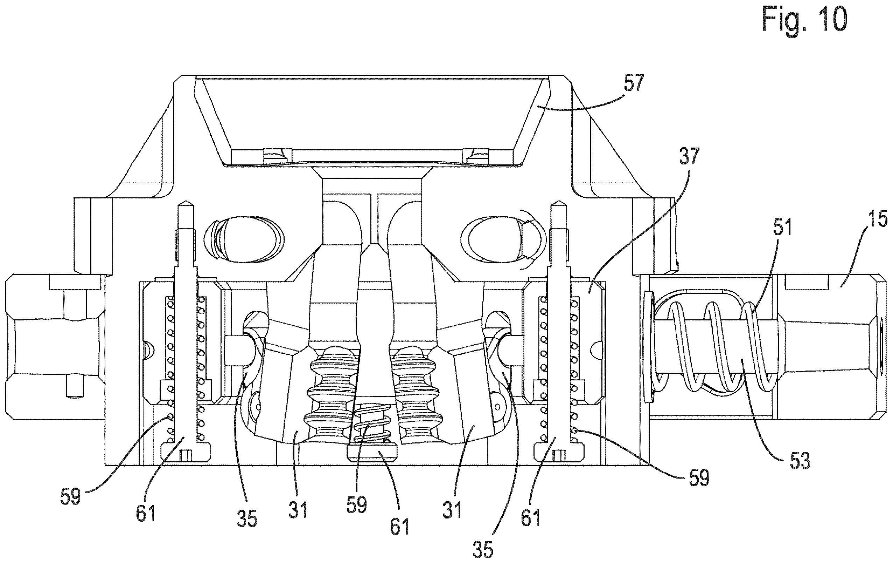

Die Freigabebewegung des Koppelrings 37 wird ferner durch eine Vorspanneinrichtung unterstützt, welche in Fig. 10 dargestellt ist. Dazu ist der Koppelring 37 mit als Druckfedern 59 ausgebildeten Federelementen versehen, die in der Arretierstellung in Richtung der Freigabestellung vorgespannt sind und den Koppelring 37 gegen einen mit dem Gehäuse der Verriegelungseinheit 11 verschraubten Schraubbolzen 61 abstützen.

Wie zuvor bereits erwähnt, erfolgt die Auslösung im vorliegenden Ausführungsbeispiel aufgrund einer Drehung des Synchronrings 101 und die damit mechanisch verbundenen Auslösestangen 103. Die Auslösestangen 103 sind zu diesem Zweck jeweils an ihrem jeder Vorrichtung 10 zugewandten Ende mit einem in den Figuren nicht gezeigten Auslösebolzen versehen, welcher durch eine in einer Anschlusszunge 47 des Auslöseelements 15 vorgesehene Öffnung 49 geführt ist. Die Öffnung 49 ist hier als Langloch ausgebildet, sodass eine spielbehaftete Kopplung des Auslöseelements 15 zu dem Synchronring 101 vorliegt. Die Auslösestange 103 und damit der Auslösebolzen können also zunächst einen Leerhub durchführen und dadurch einen Auslöseimpuls aufbauen, bevor der Auslösebolzen auf das Material der Anschlusszunge 47 trifft. Dadurch werden etwaige Hemmungen durch Reibung beim Auslösevorgang vermieden bzw. können besser überwunden werden.

Durch die auf die Anschlusszunge 47 wirkende Auslösekraft des Auslösebolzens wird die Verschiebung des Auslöseelements 15 initiiert, die zudem durch Druckfedern 51 unterstützt wird, welche einerseits an der Verriegelungseinheit 11 und andererseits am Auslöseelement 15 angreifen. Die Druckfedern 51 sind im vorliegenden Beispiel um die Führungsbolzen 53 herumgeführt.

Die Montagebasen 13 sind mit Querträgern 73 versehen, deren Enden vor Auslösung auf vorgespannten Abwurfhebeln 107 aufliegen. Bei Auslösung entspannen sich die Abwurfhebel 107 wie in Fig. 1 gezeigt und werfen dabei die Nutzlast mit den daran befindlichen Montagebasen 13 von dem Träger 100 ab, um die Nutzlast in den Weltraum freizugeben. Eine detaillierte Beschreibung des strukturellen Aufbaus und der genauen Funktionsweise derartiger Abwurfhebel 107 ist in der WO 2021/089167 A1 offenbart, deren Inhalt durch Bezugnahme ausdrücklich zum Gegenstand der vorliegenden Anmeldung gemacht wird.

### Bezugszeichenliste

- 10: Vorrichtung zum lösbaren Befestigen von Nutzlast an einem Träger
- 11: Verriegelungseinheit
- 13: Montagebasis
- 15: Auslöseelement
- 17: Verriegelungsbolzen
- 19: Kopf
- 21: Arretierabschnitt
- 23: Stützabschnitt
- 25: Bohrung
- 27: Rille
- 29: Rippe
- 31: Schwenkriegel
- 33: Eingriffsabschnitt
- 35: Schwenkhebel
- 37: Koppelring
- 39: Kulisse
- 40: Anlaufabschnitt
- 41: Eingriffselement
- 43: Feder
- 45: Verschlusskappe
- 47: Anschlusszunge
- 49: Langloch
- 51: Feder
- 53: Führungsbolzen
- 55: Zentrierung
- 57: Trennschicht
- 59: Druckfeder
- 61: Schraubbolzen
- 63: Keil
- 65: Keil
- 67: Einstellschraube
- 69: Gewinde
- 71: Stift
- 73: Querträger

- 100: Träger
- 101: Synchronring
- 103: Auslösestange
- 105: Auslöseeinheit
- 107: Abwurfhebel

## Patentansprüche

1. Vorrichtung (10) zum lösbaren Befestigen von Nutzlast an einem Träger (100), umfassend
eine Verriegelungseinheit (11), die einen zwischen einer Arretierstellung und einer Freigabestellung bewegbaren Verriegelungsmechanismus aufweist,
eine Montagebasis (13) mit einem zumindest abschnittsweise mit parallelen Rillen (27) versehenen Verriegelungsbolzen (17), wobei der Verriegelungsmechanismus mehrere Schwenkriegel (31) aufweist, die in der Arretierstellung den Verriegelungsbolzen (17) im Bereich der Rillen (27) arretieren, sowie
ein ausschließlich translatorisch verschiebbares Auslöseelement (15), das mit den Schwenkriegeln (31) gekoppelt ist.

2. Vorrichtung (10) nach Anspruch 1,
**dadurch gekennzeichnet, dass** das Auslöseelement (15) über einen ausschließlich translatorisch bewegbaren Koppelring (37) mit den Schwenkriegeln (31) gekoppelt ist, wobei die Bewegungsrichtungen des Auslöseelements (15) und des Koppelrings (37) orthogonal zueinander verlaufen.

3. Vorrichtung (10) nach Anspruch 2,
**dadurch gekennzeichnet, dass** der Koppelring (37) mit jedem Schwenkriegel (31) über einen an beiden Enden angelenkten Schwenkhebel (35) verbunden ist.

4. Vorrichtung (10) nach Anspruch 3,
**dadurch gekennzeichnet, dass** eine Mittelachse der Schwenkhebel (35) in der Arretierstellung orthogonal zu einer Mittelachse des Verriegelungsbolzens (17) orientiert ist.

5. Vorrichtung (10) nach einem der Ansprüche 2 bis 4,
**dadurch gekennzeichnet, dass** der Koppelring (37) mit Eingriffselementen (41) versehen ist, die in eine Kulisse (39) des Auslöseelements (15) eingreifen, um bei einer Bewegung des Auslöseelements (15) eine dazu orthogonale Bewegung des Koppelrings (37) hervorzurufen.

6. Vorrichtung (10) nach einem der Ansprüche 2 bis 5,
**dadurch gekennzeichnet, dass** der Koppelring (37) in der Arretierstellung in Richtung der Freigabestellung vorgespannt ist.

7. Vorrichtung (10) nach einem der vorstehenden Ansprüche,
**dadurch gekennzeichnet, dass** der Verriegelungsmechanismus eine Kulissenführung aufweist.

8. Vorrichtung (10) nach einem der vorstehenden Ansprüche,
**dadurch gekennzeichnet, dass** der Verriegelungsbolzen (17) beweglich mit der Montagebasis (13) verbunden ist.

9. Vorrichtung (10) nach einem der vorstehenden Ansprüche,
**dadurch gekennzeichnet, dass** die Montagebasis (13) einen Vorspannmechanismus aufweist, mit dem der Verriegelungsbolzen (17) in der Arretierstellung gegenüber der Montagebasis (13) vorgespannt werden kann.

10. Vorrichtung (10) nach Anspruch 9,
**dadurch gekennzeichnet, dass** der Vorspannmechanismus eine Keilanordnung aufweist, wobei die Keilanordnung insbesondere zwei Keile (63, 65) umfasst, von denen einer quer zu einer Mittelachse des Verriegelungsbolzens (17) und der andere ausschließlich parallel zu der Mittelachse des Verriegelungsbolzens (17) bewegbar ist.

11. Vorrichtung (10) nach einem der vorstehenden Ansprüche,
**dadurch gekennzeichnet, dass** die Montagebasis (13) und die Verriegelungseinheit (11) komplementär und insbesondere konusförmig ausgebildete Zentrierflächen aufweisen, wobei zwischen den Zentrierflächen insbesondere eine Trennschicht (57) vorgesehen ist.

12. Vorrichtung (10) nach einem der vorstehenden Ansprüche,
**dadurch gekennzeichnet, dass** der Verriegelungsbolzen (17) in der Freigabestellung in der Montagebasis (13) gegen die Kraft einer Feder (43) axial bewegbar ist.

13. Vorrichtung (10) nach einem der vorstehenden Ansprüche,
**dadurch gekennzeichnet, dass** das Auslöseelement (15) als ein von der Verriegelungseinheit (11) geführter Rahmen ausgebildet ist.

14. Träger (100) zum lösbaren Befestigen von Nutzlast, umfassend, mehrere Vorrichtungen (10) nach einem der vorstehenden Ansprüche, deren Verriegelungseinheiten (11) an dem Träger (100) montiert sind, und einen drehbar gelagerten Synchronring (101), der mit allen Auslöseelementen (15) mechanisch verbunden ist, um diese gleichzeitig zu verschieben und dadurch den jeweiligen Verriegelungsmechanismus von der Arretierstellung in die Freigabestellung zu bewegen.

15. Träger (100) nach Anspruch 14,
**dadurch gekennzeichnet, dass** die Auslöseelemente (15) mit dem Synchronring (101) spielbehaftet gekoppelt sind.
